# EUROPEAN PATENT SPECIFICATION

(11) **EP 2 853 154 B1**
(45) Date of publication and mention of the grant of the patent: **15.01.2020**
(21) Application number: 14186732.5
(22) Date of filing: 29.09.2014
(51) Int. Cl.: A01K 5/00

(54) **Device for the uniform distribution of fodder**
Vorrichtung zur gleichmäßigen Verteilung von Futter
Dispositif pour la distribution uniforme de fourrage

(30) Priority: 30.09.2013 IT MI20131605
(43) Date of publication of application: 01.04.2015
(73) Proprietor: Studio Progettazione Industriale di Pecis Ing. Luigi S.A.S., 24121 Bergamo (IT)
(72) Inventor: Madaschi, Matteo Giacomo, 24060 Bianzano BG (IT)
(74) Representative: Modiano, Micaela Nadia

(56) References cited:
- EP-A2- 0 298 548
- EP-A2- 0 930 005
- US-A1- 2005 077 404
- US-A1- 2012 014 208

## Description

The present invention relates to a device for the uniform distribution of fodder, particularly for livestock sheds, sheep and pig pens, poultry coops and the like.

Devices are known, for the distribution of fodder for animals, which are mounted on board a vehicle, typically a quadricycle or a trailer of a quadricycle, and which draw the fodder from a reservoir transported by the vehicle in order to cast it along a manger as the vehicle advances. The fodder is generally constituted by unsorted or loose products, such as for example, forage or cut plants, but also granular food products and seeds.

Such devices, which typically use horizontal or vertical screw feeders, are not devoid of drawbacks, which include the fact that the dispensing of the fodder occurs in surges and the result is that, along the manger, the fodder is distributed in piles.

This lack of homogeneity of the distribution of the fodder is a drawback especially in those cases in which the movement of the head of the animals is impeded and, thus, some animals have an excessive quantity of fodder in their portion of the manger, to the detriment of the other, neighboring animals.

The operator is thus forced to manually even out the distributed fodder so as to level out the piles that are created.

Furthermore, the above mentioned devices for the distribution of fodder suffer the drawback of often becoming engulfed and thus requiring the machine to be shut down, as well as the manual intervention of an operator.

The above mentioned devices for the distribution of fodder further suffer the drawback of dispensing relatively reduced volumes of fodder.

EP 0 298 548 discloses an apparatus for delivering fodder comprising fodder container that narrows in a downward direction, a plurality of rotationally drivable agitators inside the container, and a delivery device connected to the underside of the container.

Documents US 2012/014208 A1, US 2005/077404 A1 and EP0930005 A2 describe other known apparatuses for delivering fodder.

The aim of the present invention is to provide a device for the distribution of fodder for animals which is capable of improving the known art in one or more of the above mentioned aspects.

Within this aim, an object of the invention is to provide a device for the distribution of fodder which can be installed on a traditional vehicle and which makes it possible to obtain a uniform distribution of fodder along the entire area designated as manger which is traveled by the vehicle.

Another object of the invention is to provide a device for the distribution of fodder which makes it possible to vary the implements adapted for distribution on the basis of requirements and/or of the type or consistency of fodder to distribute.

A further object of the invention is to provide a device for the distribution of fodder which does not suffer from the phenomena of becoming engulfed with fodder, and which is capable of dispensing high volumes of fodder.

In accordance with the invention, there is provided a device for the uniform distribution of fodder as defined in the appended claims.

Further characteristics and advantages of the invention will become better apparent from the description of a preferred, but not exclusive, embodiment of the device for the uniform distribution of fodder according to the invention, which is illustrated by way of non-limiting example in the accompanying drawings wherein:
Figure 1 is a perspective view of the device for the uniform distribution of fodder according to the invention, installed on a vehicle;

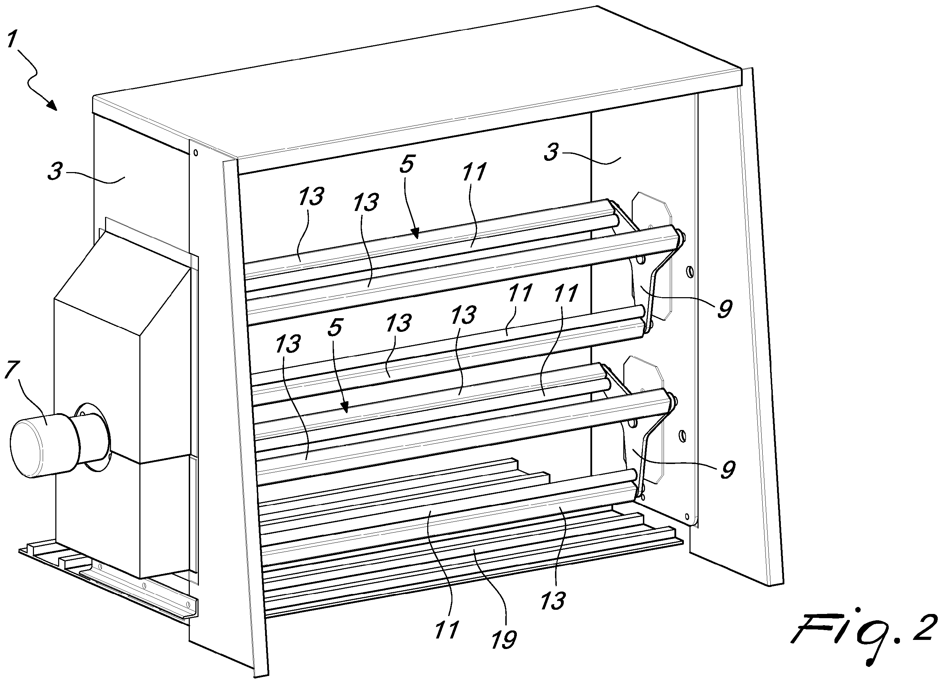

Figure 2 is a perspective view of the device for the uniform distribution of fodder according to the invention;

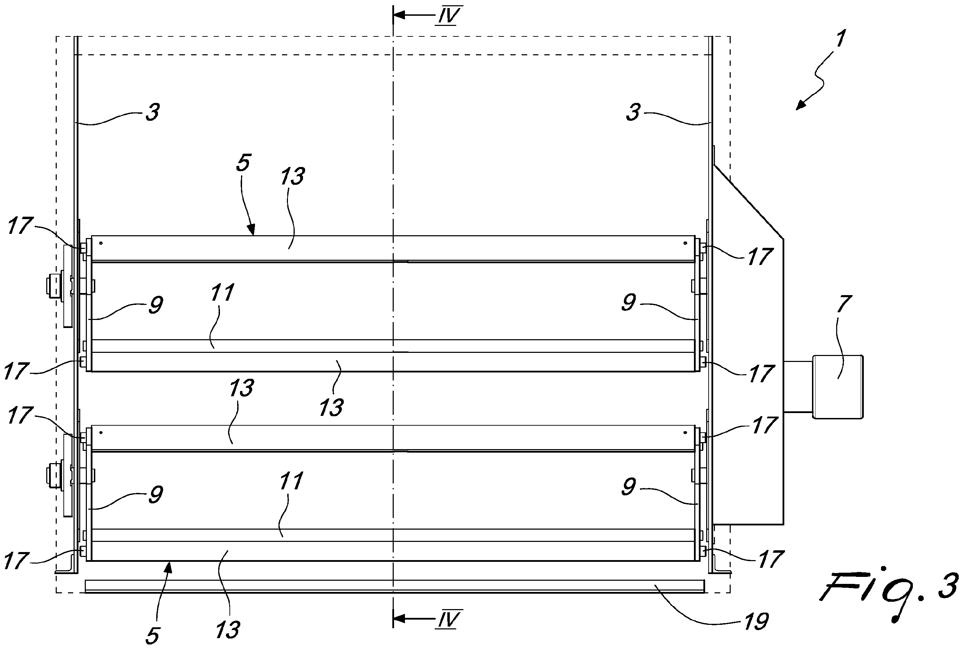

Figure 3 is a front elevation view of the device for the uniform distribution of fodder in Figure 2;

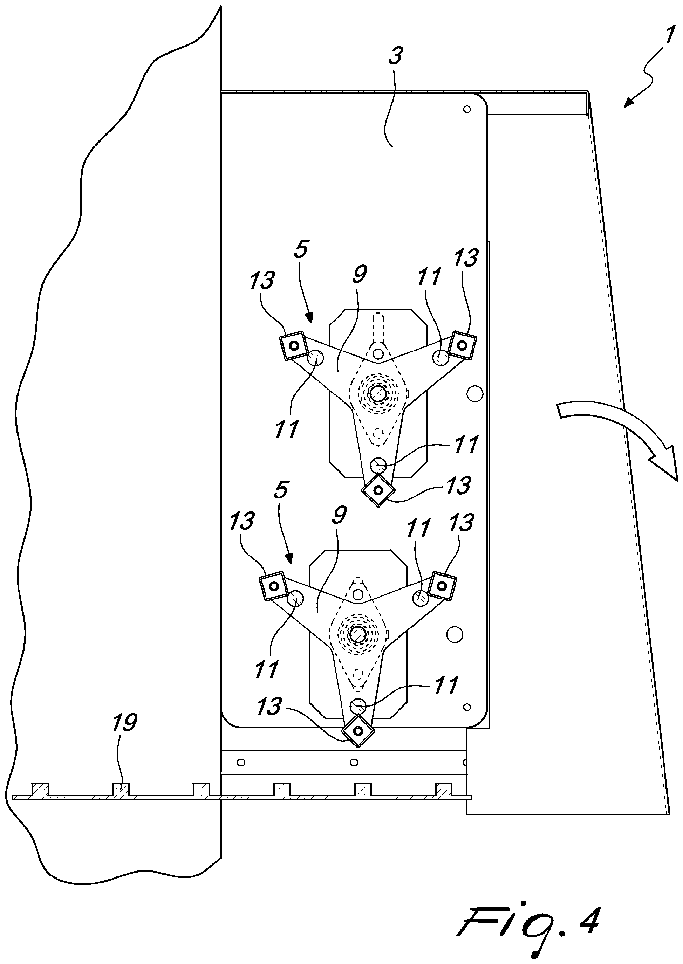

Figure 4 is a sectional view of the device for the uniform distribution of fodder, shown in Figure 3, taken along the line IV-IV;

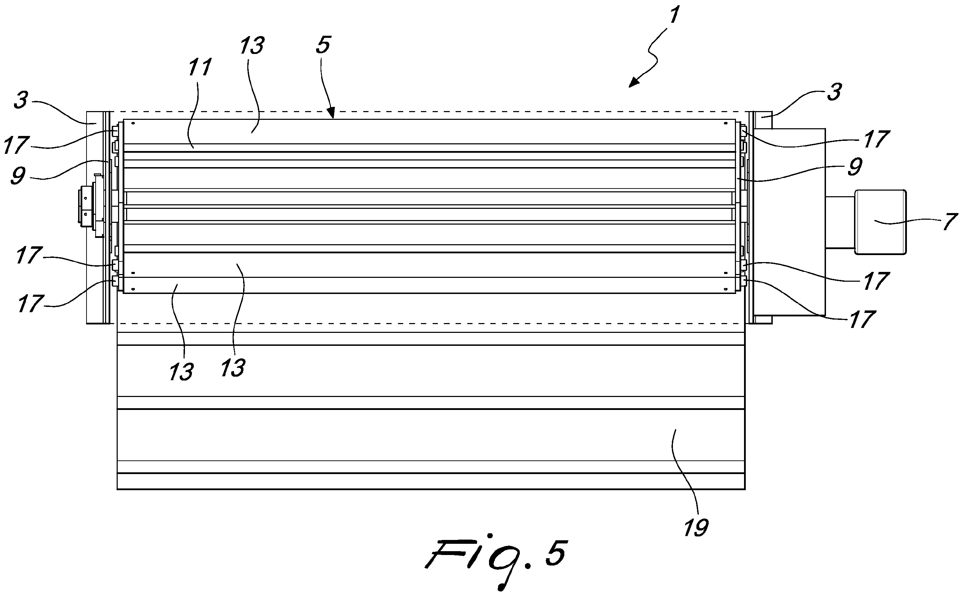

Figure 5 is a view from above of the device for the uniform distribution of fodder in Figure 2.

With reference to the figures, the device for the uniform distribution of fodder according to the invention, generally designated by the reference numeral 1, comprises two mutually opposite shoulders 3 that support a plurality of cages 5, for example two as in the case shown, which can rotate about their own axis and are connected to a motor means 7, which comprise for example a single motor coupled to transmission means that actuate respective sprockets that are fixed to a plate 9 of each cage 5 at one of the two shoulders 3.

Each one of the cages 5 is defined by a pair of mutually opposite plates 9 each of which is rotatably mounted on a respective shoulder 3, and by a plurality of longitudinal bars 11 that are fixed to the peripheral region of the plates 9.

The plates 9 are rigidly connected to each other exclusively by way of such longitudinal bars 11 and without a central shaft at the rotation axis, so as to avoid obstacles upon the passage of the fodder within the cage 5.

The plates 9 can, furthermore, be tri-lobed and connected overall by three bars 11, which are located at a respective lobe of the plate.

The cages 5 (or at least two of them, if there are more than two) are transversely mutually spaced so that the respective rotation axes do not overlap, in particular so that their rotation trajectories do not intersect and they define between them an opening for the fodder 15 to pass through. The rotation axes of at least two of the cages 5 are located on a plane that is substantially transverse to the direction for dispensing the fodder. For example, such rotation axes can be spaced apart by approximately 320mm, if the diameter of the cylindrical trajectory defined by the rotation of each cage 5 is approximately 270mm.

At least one of the cages 5 comprises further, mounted between the respective plates 9, vanes 13 that are extended longitudinally between the plates 9.

Preferably, each one of the vanes 13 is connected between the respective plates 9 in a direction that is substantially parallel, adjacent and radially more external with respect to a respective one of the longitudinal bars 11.

The vanes 13 are fixed detachably between the respective plates 9, for example by way of axial screws 17.

At least one of the vanes 13 (or all of them, as in the case shown) can have a quadrangular transverse cross-section. Preferably, such vanes 13 with a quadrangular transverse cross-section are fixed to the respective plates 9 so that the diagonal of such quadrangular cross-section is directed radially with respect to the rotation axis of the respective cage 5. In this manner, the fodder 15 tends to slip on the vane 13, thanks to the quadrangular transverse cross-section thereof and to the inclination shown. The tubular quadrangular cross-section configuration of the vane 13 in fact, differently from vanes of the flat type, favor the slipping of the fodder 15, thus preventing the distributor from becoming engulfed.

At least one of the vanes 13 (or all of them, as in the case shown) is internally hollow, in order to lighten the structure. In such case, it is possible to have, inside the vanes 13, a plurality of magnetic bodies distributed longitudinally within the vane 13. Such magnetic bodies are distributed longitudinally within the vane 13. The vane 13, if provided with the aforementioned magnetic bodies, is useful for retaining metallic material that may be present in the fodder, in order to prevent this from being dispensed to the animals together with the fodder.

In each one of the cages 5, the bars 11 can be mutually equidistant along the peripheral region of the plates 9 and with respect to the rotation axis of the cage 5, and preferably are three in number.

The rotation speed of each cage can be for example 160 revolutions per minute.

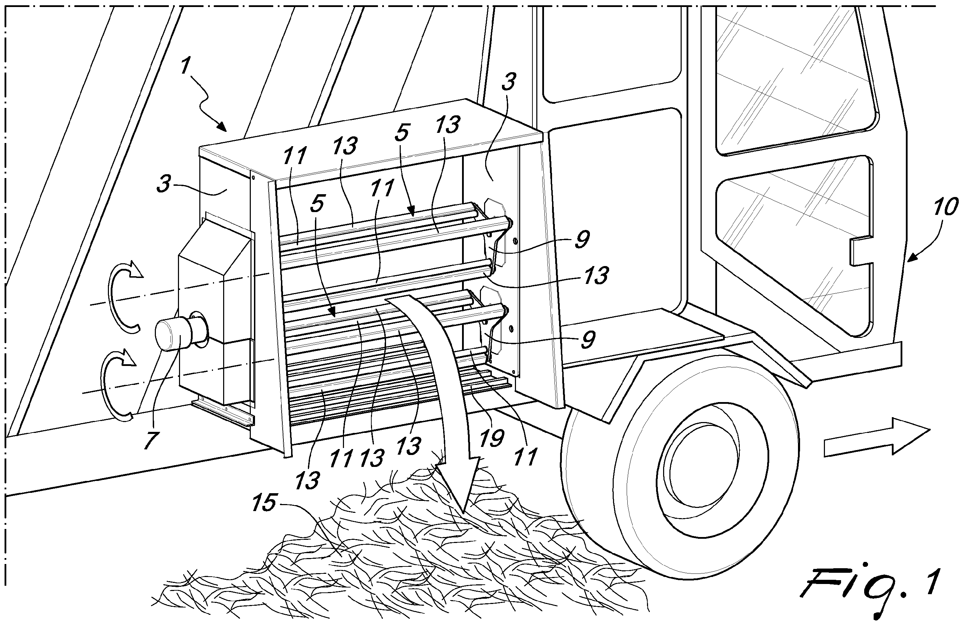

Figure 1 shows a fodder distribution vehicle 10 which comprises a fodder reservoir, provided with an inner screw feeder or with equivalent means of movement and with a fodder discharge outlet. Installed on the vehicle 10, at the discharge outlet, is the device for the uniform distribution of fodder 1.

The vehicle 10 can be a quadricycle or a trailer of a quadricycle.

The device 1 can further comprise a lower containment floor 19, which is preferably located under the cages 5, at them, and which is adapted to retain the fodder that is not expelled at the first attempt by the cages 5, but which, by falling vertically owing to gravity, proximate to, or through the cages 5, would otherwise end up under the vehicle 10 without being dispensed to the animals. The action of rotation and expulsion of the fodder exerted by the cages 5 affects preferably also the region of the device 1 adjacent to the lower containment floor 19, thus preventing the fodder 15 from accumulating on the surface 19. Advantageously, the containment floor 19 can also be defined by the upper surface of a conveyor belt, for example of the type with cleats, which is adapted to assist the action of expulsion of the fodder exerted by the rotating cages 5.

In practice it has been found that the device according to the invention fully achieves the set aim in that it enables a uniform distribution of the fodder, without the formation of separate piles along the advancement direction of the vehicle that carries it.

Another advantage of the device, according to the invention, consists in that it prevents phenomena of becoming engulfed with fodder, while ensuring the dispensing of fodder at high volumes.

Another advantage of the device, according to the invention, consists in that the components that are most prone to wear and damage, such as the vanes, are easily removable in order to be replaced. Furthermore, the vanes can rotate on their axis or even be substituted with vanes with different configurations, on the basis of the requirements for dispensing and/or of the type or of the consistency of the fodder to be distributed.

It has also been found that the invention makes it possible to prevent unwanted problems of separation of the components of the fodder, for example separation of the hay from the meal, thus preventing the animal from feeding on only some of the components of the fodder.

The device, thus conceived, is susceptible of numerous modifications and variations, all of which are within the scope of the appended claims. Moreover, all the details may be substituted by other, technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for the uniform distribution of fodder (1), comprising two mutually opposite shoulders (3) that support a plurality of cages (5) that can rotate about their own axis and are connected to motor means (7), each one of said cages (5) being defined by a pair of mutually opposite plates (9), which are mounted so that they can rotate on a respective one of said shoulders (3), and by a plurality of longitudinal bars (11), which are fixed to the peripheral region of said plates (9), at least two of said cages (5) being spaced transversely so that the corresponding rotation axes are not superimposed, in each cage (5) the plates (9) being rigidly connected to each other exclusively by way of said bars (11) and without a central shaft, **characterized in that** at least one of said cages (5) comprises furthermore, mounted between the respective plates (9), vanes (13) that are extended longitudinally between the plates (9), and said vanes (13) being fixed detachably between the respective plates (9); at least one of said vanes (13) being internally hollow and comprising internally a plurality of magnetic bodies that are distributed longitudinally within said at least one vane (13).

2. The device (1) according to claim 1, **characterized in that** each one of said vanes (13) is connected between the respective plates (9) in a direction that is substantially parallel, adjacent and radially more external with respect to a respective one of said longitudinal bars (11).

3. The device (1) according to one or more of claims 1 to 2, **characterized in that** at least one of said vanes (13) has a quadrangular transverse cross-section.

4. The device (1) according to claim 3, **characterized in that** a diagonal of said quadrangular cross-section is directed radially with respect to the rotation axis of the respective cage (5).

5. The device (1) according to one or more of the preceding claims, **characterized in that**, in each one of said cages (5), said bars (11) are mutually equidistant along the peripheral region of the plates (9) and with respect to the rotation axis of the cage (5) and preferably are three in number.

6. The device (1) according to one or more of the preceding claims, **characterized in that** the rotation trajectories of said cages (5) neither intersect nor overlap, so as to define between said trajectories an opening for the passage of the fodder.

7. A fodder distribution vehicle (10), comprising a fodder reservoir with a fodder discharge outlet, **characterized in that** it comprises at said discharge outlet the device (1) according to one or more of the preceding claims.

## Patentansprüche

1. Eine Vorrichtung zur gleichmäßigen Verteilung von Futter (1), die zwei einander gegenüberliegende Schultern (3) umfasst, welche eine Vielzahl von Käfigen (5) tragen, die sich um ihre eigene Achse drehen können und mit Motormitteln (7) verbunden sind, wobei jeder der Käfige (5) durch ein Paar einander gegenüberliegender Platten (9) bestimmt ist, die drehbar auf einer entsprechenden der Schultern (3) montiert sind, und durch ein Paar von Längsstangen (11), welche an dem peripheren Bereich der Platten (9) befestigt sind; wobei mindestens zwei der Käfige (5) quer so beabstandet sind, dass die entsprechenden Drehachsen nicht übereinanderliegen; wobei die Platten (9) in jedem Käfig (5) ausschließlich durch die Stangen (11) und ohne zentrale Welle starr miteinander verbunden sind; **dadurch gekennzeichnet, dass** mindestens einer der Käfige (5) weiter Schaufeln (13), zwischen den jeweiligen Platten (9) montiert, umfasst, die sich in Längsrichtung zwischen den Platten (9) erstrecken, und wobei die Schaufeln (13) abnehmbar zwischen den entsprechenden Platten (9) befestigt sind; wobei mindestens eine der Schaufeln (13) innen hohl ist und in ihrem Inneren eine Vielzahl magnetischer Körper umfasst, welche in der mindestens einen Schaufel (13) in Längsrichtung verteilt sind.

2. Die Vorrichtung (1) gemäß Anspruch 1, **dadurch gekennzeichnet, dass** jede der Schaufeln (13) zwischen den entsprechenden Platten (9) in einer Richtung angeschlossen ist, die im Wesentlichen parallel zu und radial mehr außerhalb im Verhältnis zu einer entsprechenden der Längsstangen (11) liegt und ihr benachbart ist.

3. Die Vorrichtung (1) gemäß einem oder mehreren der Ansprüche 1 bis 2, **dadurch gekennzeichnet, dass** mindestens eine der Schaufeln (13) einen viereckigen transversalen Querschnitt hat.

4. Die Vorrichtung (1) gemäß Anspruch 3, **dadurch gekennzeichnet, dass** eine Diagonale des viereckigen Querschnitts radial zur Drehachse des jeweiligen Käfigs (5) ausgerichtet ist.

5. Die Vorrichtung (1) gemäß einem oder mehreren der obigen Ansprüche, **dadurch gekennzeichnet, dass** in jedem der Käfige (5) die Stangen (11) entlang dem peripheren Bereich der Platten (9) und mit Bezug auf die Drehachse des Käfigs (5) äquidistant voneinander und vorzugsweise drei an der Zahl sind.

6. Die Vorrichtung (1) gemäß einem oder mehreren der obigen Ansprüche, **dadurch gekennzeichnet, dass** die Rotationstrajektorien der Käfige (5) sich weder schneiden noch überlagern, um zwischen den Trajektorien eine Öffnung für den Durchlass des Futters zu bestimmen.

7. Ein Futterverteilfahrzeug (10), das einen Futterbehälter mit einem Futterauslass umfasst; **dadurch gekennzeichnet, dass** es an dem Auslass die Vorrichtung (1) gemäß einem oder mehreren der obigen Ansprüche umfasst.

## Revendications

1. Dispositif pour la distribution uniforme de fourrage (1), comportant deux épaulements mutuellement opposés (3) qui supportent une pluralité de cages (5) qui peuvent tourner autour de leur axe propre et sont reliées à des moyens moteurs (7), chacune desdites cages (5) étant définie par une paire de plaques mutuellement opposées (9), qui sont montées de sorte qu'elles peuvent tourner sur un épaulement respectif parmi lesdits épaulements (3), et par une pluralité de barres longitudinales (11), qui sont fixées à la zone périphérique desdites plaques (9), au moins deux desdites cages (5) étant espacées transversalement de sorte que les axes de rotation correspondants ne sont pas superposés, les plaques (9) étant rigidement reliées les unes aux autres dans chaque cage (5) exclusivement au moyen desdites barres (11) et sans un arbre central, **caractérisé en ce qu'**au moins une desdites cages (5) comporte en outre, montées entre les plaques (9) respectives, des ailettes (13) qui s'étendent longitudinalement entre les plaques (9), et lesdites ailettes (13) étant fixées de manière détachable entre les plaques (9) respectives ; au moins une desdites ailettes (13) étant intérieurement creuse et comportant intérieurement une pluralité de corps magnétiques qui sont répartis longitudinalement à l'intérieur de ladite au moins une ailette (13).

2. Dispositif (1) selon la revendication 1, **caractérisé en ce que** chacune desdites ailettes (13) est reliée entre les plaques (9) respectives dans une direction qui est sensiblement parallèle, adjacente et radialement plus extérieure par rapport à une barre respective parmi lesdites barres longitudinales (11).

3. Dispositif (1) selon une ou plusieurs des revendications 1 à 2, **caractérisé en ce qu'**au moins une desdites ailettes (13) a une section transversale quadrangulaire.

4. Dispositif (1) selon la revendication 3, **caractérisé en ce qu'**une diagonale de ladite section transversale quadrangulaire est dirigée radialement par rapport à l'axe de rotation de la cage (5) respective.

5. Dispositif (1) selon une ou plusieurs des revendications précédentes, **caractérisé en ce que**, dans chacune desdites cages (5), lesdites barres (11) sont mutuellement équidistantes le long de la zone périphérique des plaques (9) et par rapport à l'axe de rotation de la cage (5) et sont de préférence au nombre de trois.

6. Dispositif (1) selon une ou plusieurs des revendications précédentes, **caractérisé en ce que** les trajectoires de rotation desdites cages (5) ne se croisent pas et ne se chevauchent pas, de manière à définir, entre lesdites trajectoires, une ouverture pour le passage du fourrage.

7. Véhicule de distribution de fourrage (10), comportant un réservoir de fourrage avec une sortie d'évacuation de fourrage, **caractérisé en ce qu'**il comporte, au niveau de ladite sortie d'évacuation, le dispositif (1) selon une ou plusieurs des revendications précédentes.
